# EUROPÄISCHE PATENTANMELDUNG

(11) **EP 4 198 388 A1**
(43) Veröffentlichungstag der Anmeldung: **21.06.2023**
(21) Anmeldenummer: 21215623.6
(22) Anmeldetag: 17.12.2021
(51) Int. Cl.: F22B 1/00, F01K 25/00

(54) **ANLAGE MIT SCHNELLDAMPFERZEUGER**

(71) Anmelder: Siemens Energy Global GmbH & Co. KG, 81739 München (DE)
(72) Erfinder: Brück, Stefan, 45470 Mülheim an der Ruhr (DE); Stüer, Carmen, 45721 Haltern Hullern (DE)

(57) **Zusammenfassung**

Die Erfindung betrifft eine Anlage (1) umfassend einen Dampferzeuger (2) und einen Dampfverbraucher (7), wobei der Dampfverbraucher (7) im Nominalfall eine erste Dampfmenge benötigt und im Störfall eine zweite größere Dampfmenge benötigt, wobei durch einen Schnelldampferzeuger (18) im Störfall schnell Dampf erzeugt wird, um die zweite Dampfmenge zur Verfügung zu stellen.

## Beschreibung

Die Erfindung betrifft eine Anlage umfassend einen Dampferzeuger, einen Dampfverbraucher, wobei ein Ausgang des Dampferzeugers mit einem Eingang des Dampfverbrauchers strömungstechnisch verbunden ist.

Des Weiteren betrifft die Erfindung ein Verfahren zum Betreiben einer Anlage, wobei die Anlage mit einem Dampferzeuger und einem Dampfverbraucher ausgebildet wird, wobei der Dampferzeuger Dampf für den Dampfverbraucher erzeugt, wobei der Dampfverbraucher für einen ersten Betriebszustand mit einer ersten Dampfmenge und in einem zweiten Betriebszustand mit einer zweiten Dampfmenge ausgelegt wird, wobei die zweite Dampfmenge größer ist als die erste Dampfmenge.

Des Weiteren betrifft die Erfindung ein Verfahren zum Umrüsten einer bestehenden Dampfverbraucher-Anlage mit einem Dampferzeuger und einem Dampfverbraucher, wobei ein Dampf für den Dampfverbraucher mit dem Dampferzeuger erzeugt wird, wobei der Dampfverbraucher in einem ersten Betriebszustand eine erste Dampfmenge und in einem zweiten Betriebszustand eine zweite Dampfmenge benötigt, wobei die zweite Dampfmenge größer ist als die erste Dampfmenge, wobei der Dampferzeuger im Vollast-Betrieb die zweite Dampfmenge erzeugen kann, wobei eine Dampfturbine vorgesehen wird, die mit vom Dampfverbraucher nicht benötigten Dampf beaufschlagt wird.

Es existieren Anlagen, in denen ein Dampferzeuger Dampf für einen Dampfverbraucher erzeugt. Häufig wird in diesen Anlagen, in denen industrielle Prozesse ablaufen, Dampf als Arbeitsmedium oder zur Wärmeversorgung genutzt. Aufgrund der thermischen Eigenschaften von Wasser sind die meisten Dampferzeuger allerdings vergleichsweise träge Systeme, d.h. Änderungen der Dampf- oder Wärmemengen können nur relativ langsamen angepasst werden.

Es kann vorkommen, dass in einem Prozess Ereignisse eintreten können, bei denen eine große Dampf- und/oder Wärmemenge benötigt werden. Dies ist zum Beispiel in einem Störfall erforderlich.

Die Anlagen werden dabei derart betrieben, dass die für das Ereignis benötigte erhöhte Dampfmenge permanent vom Dampferzeuger erzeugt wird. Die Anlage wird mit anderen Worten in einem Zustand betrieben, bei dem ein Überschussproduktion an Dampf erfolgt.

Die Anlagen werden dabei derart betrieben, dass der Dampferzeuger vorsorglich permanent eine für einen Störfall passende Überschussmenge erzeugt.

Die für das Ereignis, beispielsweise den Störfall notwendige Dampfmenge wird dann in den meisten Fällen im Normalbetrieb in einer Dampfturbine expandiert, die dann beispielsweise zur Erzeugung von elektrischer Energie eingesetzt wird.

Sofern das Ereignis eintritt, kann durch ein vor der Dampfturbine angeordnetes Regelorgan, wie zum Beispiel einem Ventil die Dampfmenge in der Dampfturbine entsprechend reduziert werden. Dadurch kann ein Dampf zur Verfügung gestellt werden, der dann kurzfristig als Prozessdampf zum Dampfverbraucher geleitet wird.

Die Überproduktion an Dampf muss bisher durch das permanente zusätzliche Verbrennen fossiler Brennstoffe erzeugt werden. Die Überproduktion an Dampf kann beispielsweise durch einen fossil befeuerten Dampferzeuger, einen Abhitzekessel, einen elektrischen Überhitzer oder einer Brennstoffzelle erzeugt werden.

Bisher wird dieser Überschuss in den meisten Fällen nicht verworfen, sondern umgewandelt, z.B. in elektrische Energie. Allerdings ist aus wirtschaftlicher Sicht, die somit erzeugte elektrische Energie in den meisten Fällen nicht kostendeckend.

Mit dem Ausbau regenerativer Energien, dem Anstieg der CO₂ Preise usw. ist zu erwarten, dass sich dies zukünftig noch weiter verschlechtert.

Die Erfindung hat es sich ausgehend von den bekannten Problemen und Nachteilen des Standes der Technik zur Aufgabe gemacht eine Anlage und ein Verfahren anzugeben, mit der ein Kostenvorteil erzielt werden kann.

Die auf die Vorrichtung hin gerichtete Aufgabe wird durch den Patentanspruch 1 gelöst.

Die vom Patentanspruch 1 abhängigen und rückbezogenen Unteransprüche betreffen vorteilhafte Weiterbildungen der Erfindung.

Die auf das Verfahren hin gerichtete Aufgabe wird durch den Patentanspruch 9 gelöst.

Die vom Patentanspruch 9 abhängigen und rückbezogenen Unteransprüche betreffen vorteilhafte Weiterbildungen der Erfindung.

Die auf das Verfahren zum Umrüsten gerichtete Aufgabe wird durch den Patentanspruch 16 gelöst.

Die vom Patentanspruch 16 abhängigen und rückbezogenen Unteransprüche betreffen vorteilhafte Weiterbildungen der Erfindung.

Ein wesentliches Merkmal der Erfindung ist der Einsatz eines Schnelldampferzeugers. Dieser Schnelldampferzeuger, der auch als Steam Booster bezeichnet werden kann, ist zum Erzeugen von Dampf ausgebildet, wobei die im Schnelldampferzeuger erzeugte Dampfmenge im Vergleich zum dem Dampferzeuger sehr viel schneller erzeugt werden kann. Dazu wird beispielsweise ein Schnelldampferzeuger eingesetzt, der durch die Verbrennung von Wasserstoff Dampf und thermische Energie erzeugt. Bei der Verbrennung von Wasserstoff findet eine chemische Reaktion statt, bei der Wasserstoff und Sauerstoff miteinander reagieren, wobei nach der chemischen Reaktion Wasserdampf und thermische Energie erzeugt wird.

Die Erfindung geht darüber hinaus von dem Gedanken aus, dass eine ständige Überproduktion von Dampf entfallen kann und der Schnelldampferzeuger im Bedarfsfall die erhöhte Menge an Dampf zur Verfügung stellt. Optional kann der Dampferzeuger im Normalbetrieb in Teillast betrieben wird und dann im Störfall die erhöhte Menge in Volllast erreichen. Nach dem Erreichen der Volllast kann der Dampferzeuger die erhöhte Dampfmenge zur Verfügung stellen, wobei der Schnelldampferzeuger anschließend wieder abgeschaltet werden kann.

Bei der direkten Verbrennung von Wasserstoff und Sauerstoff wird der Phasenübergang (Sattdampfgebiet) übersprungen, so dass große Mengen an Wärme und / oder Dampf bei Temperaturen bis zu > 1300° sehr schnell erzeugt werden können. Da im Gegensatz zu bisherigen Systemen, die mit fossilen Brennstoffen betrieben werden, bei der direkten Verbrennung das Verbrennungsprodukt gleich dem Kreislaufmedium ist, entfallen bisher notwendige Wärmetauscher, wodurch besonders schnelle Lastwechsel ermöglicht werden.

Durch den Einsatz einer direkten Verbrennung von Wasserstoff und Sauerstoff zur Erzeugung von Dampf kann auf eine permanente Überproduktion von Dampf verzichtet werden oder diese zumindest stark reduziert werden. Somit kann der Energiebedarf der Systeme und gleichzeitig der Einsatz fossiler Brennstoffe stark reduziert werden. Der sonst durch die schnelle Reduktion der Dampfmenge durch die Dampfturbine bereitgestellte Prozessdampf wird hier durch eine direkte Verbrennung von Wasserstoff und Sauerstoff erzeugt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: Eine schematische Darstellung einer Anlage gemäß dem Stand der Technik
- Figur 2: Eine schematische Darstellung einer erfindungsgemäßen Anlage

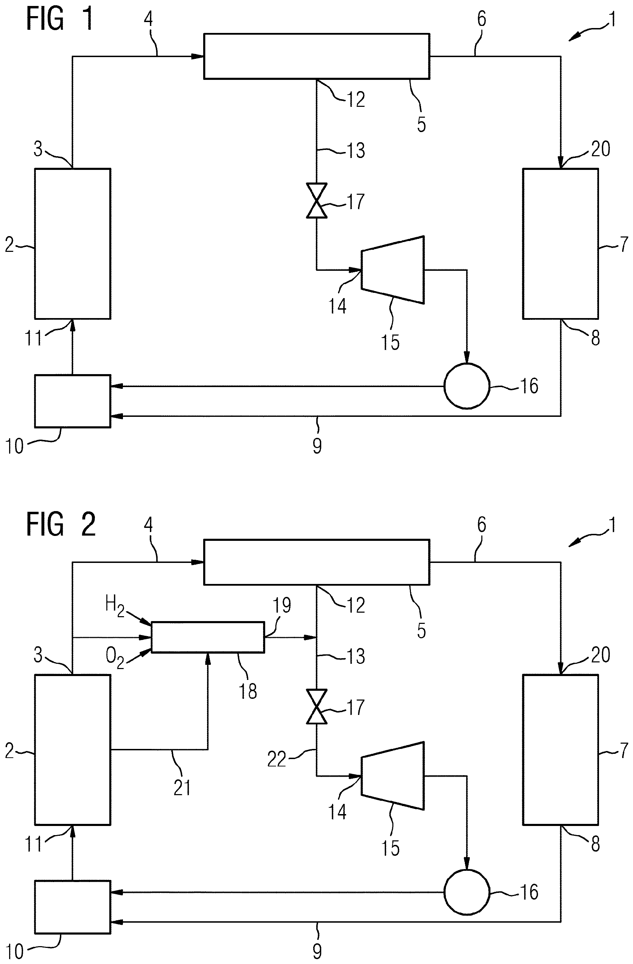

Die Figur 1 zeigt eine Anlage 1 gemäß dem Stand der Technik. Die Anlage 1 umfasst einen Dampferzeuger 2. Der Dampferzeuger 2 ist zum Erzeugen von Dampf ausgebildet. Ein Ausgang 3 des Dampferzeugers 2 ist strömungstechnisch über eine erste Leitung 4 mit einer Sammelschiene 5 verbunden. Der in der Sammelschiene 5 befindliche Dampf wird über eine zweite Leitung 6 in einen Dampfverbraucher 7 geströmt.

Ein Ausgang 8 des Dampfverbrauchers 7 ist strömungstechnisch über die dritte Leitung 9 mit einem Wassertank 10 verbunden. Der Wassertank 10 ist wiederum strömungstechnisch mit einem Eingang 11 des Dampferzeugers 2 verbunden.

Die Sammelschiene 5 verfügt über einen weiteren Ausgang 12, der strömungstechnisch über eine vierte Leitung 13 mit einem Eingang 14 einer Dampfturbine 15 verbunden ist. In der Dampfturbine 15 wird die thermische Energie des Dampfes in Bewegungsenergie umgewandelt, wobei die Bewegungsenergie in elektrische Energie mittels Generatoren (nicht dargestellt) umgewandelt werden kann.

Der aus der Dampfturbine 15 ausströmende Dampf wird nun in einem Kondensator 16 wieder in Wasser umgewandelt. Das im Kondensator 16 umgewandelte Wasser strömt über den Wassertank 10 wieder in den Dampferzeuger 2.

Die Anlage 1 gemäß dem Stand der Technik weist folgende Funktionsweise auf: Der Dampfverbraucher 7 weist zumindest zwei Betriebszustände auf. Im ersten Betriebszustand benötigt der Dampfverbraucher 7 eine erste Dampfmenge. Im zweiten Betriebszustand benötigt der Dampfverbraucher 7 eine zweite Dampfmenge. Die zweite Dampfmenge ist größer als die erste Dampfmenge.

Es ist nicht immer vorhersehbar, wann die Anlage 1, die im Dauerbetrieb im ersten Betriebszustand betrieben wird, in den zweiten Betriebszustand wechselt. In der Regel ist der Dampferzeuger 2 träge. Das bedeutet, dass die Erzeugung der zweiten Dampfmenge vergleichsweise lange dauert. Allerdings wird die zweite Dampfmenge im zweiten Betriebszustand schnell benötigt. Daher wird die für den zweiten Betriebszustand benötigte zweite Dampfmenge bereits im Dampferzeuger 2 erzeugt. Der im Dampfverbraucher 7 nicht benötigte Dampf wird über die Dampfturbine 15 geleitet.

Die Dampfmenge, die in die Dampfturbine 15 strömt, kann über ein Ventil 17 geregelt werden. Im zweiten Betriebszustand wird daher das Ventil 17 gedrosselt, so dass mehr Dampfmenge für den Dampfverbraucher 7 zur Verfügung steht.

Die Figur 2 zeigt nun eine verbesserte erfinderische Anlage 1. Ein Unterschied der Anlage 1 gemäß Figur 2 zu der Anlage 1 gemäß Figur 1 ist die Bereitstellung eines Schnelldampferzeugers 18. Der Schnelldampferzeuger 18 ist derart ausgebildet, dass dieser durch die Verbrennung von Wasserstoff Dampf und thermische Energie erzeugt. Ein Ausgang 19 des Schnelldampferzeugers 18 ist mit dem Eingang 20 des Dampfverbrauchers 7 verbunden. In alternativen Ausführungsformen wird aus der Dampfturbine 15 Dampf entnommen.

Der Dampferzeuger 2 ist zur Erzeugung von Dampf für den ersten Betriebszustand und für den zweiten Betriebszustand betreibbar, wobei der Schnelldampferzeuger 18 derart ausgebildet ist, dass dieser Dampf für den zweiten Betriebszustand erzeugt.

Die Bereitstellung des Dampfes aus dem Schnelldampferzeuger 18 erfolgt vergleichsweise schnell. In dem Schnelldampferzeuger erfolgt eine chemische Reaktion zwischen Wasserstoff und Sauerstoff, wobei Wasserdampf und thermische Energie erzeugt wird.

Der Dampferzeuger 2 ist wie in Figur 1 im ersten Betriebszustand für Teillast und im zweiten Betriebszustand für Volllast ausgelegt.

Die erfindungsgemäße Anlage 1 gemäß Figur 2 wird nun folgendermaßen betrieben: Im Dauerbetrieb oder im Nominalbetrieb wird der Dampferzeuger 2 in Teillast betrieben und liefert die erste Dampfmenge, die der Dampfverbraucher benötigt. Dies ist der erste Betriebszustand.

Ein Teil der Dampfmenge kann über die Dampfturbine 15 abgezweigt werden, wobei dadurch elektrische Energie erzeugbar ist.

Im zweiten Betriebszustand benötigt der Dampfverbraucher 7 die zweite Dampfenge. Zu einem ersten Zeitpunkt des zweiten Betriebszustand wird die zweite Dampfmenge durch den Dampferzeuger 2 und dem Schnelldampferzeuger 18 erzeugt. Die Erzeugung des Dampfes aus dem Schnelldampferzeuger 18 erfolgt vergleichsweise schnell. Gleichzeitig wird der Dampferzeuger 2 von Teillast auf Volllast umgestellt, so dass der Dampferzeuger 2 immer mehr Dampf erzeugt.

Sobald der Dampferzeuger 2 alleine die zweite Dampfmenge erzeugt, wird der Schnelldampferzeuger 18 wieder abgestellt. Demnach wird zu einem zweiten Zeitpunkt des zweiten Betriebszustandes die zweite Dampfmenge durch den Dampferzeuger 2 ohne dem Schnelldampferzeuger 18 erzeugt.

Die Dampfmenge, die in die Dampfturbine 15 strömt, wird über das Ventil 17 geregelt. Somit kann insgesamt die in den Dampfverbraucher 7 strömende Dampfmenge mit der Dampfturbine 15 geregelt werden.

In einer alternativen Ausführungsform kann eine Wasserleitung 21 vom Dampferzeuger 2 zu dem Schnelldampferzeuger 18 geführt werden. Das aus dieser Wasserleitung 21 geleitete Wasser kann durch die im Schnelldampferzeuger 18 erzeugte thermische Energie in Dampf umgewandelt werden. Dadurch kann eine noch größere Dampfmenge schnell und einfach zur Verfügung gestellt werden.

Die erfindungsgemäße Idee eignet sich bestehende Anlagen, bei denen eine erste und zweite Dampfmenge in einem Dampfverbraucher 7 benötigt wird, umzurüsten. Dazu muss der Schnelldampferzeuger 18 zusätzlich in eine bestehende Anlage installiert werden. Die bestehenden Komponenten, wie zum Beispiel der Dampferzeuger 2 oder die Dampfturbine 15 müssen in der Regel nicht ausgetauscht werden. Durch diese Umrüstung ändert sich die Fahrweise des Dampferzeugers 2, was zu einer Kostenersparnis führt.

## Patentansprüche

1. Anlage (1) umfassend
einen Dampferzeuger (2) und einen Dampfverbraucher (7), wobei ein Ausgang (3) des Dampferzeugers (2) mit einem Eingang (20) des Dampfverbrauchers (7) strömungstechnisch verbunden ist,
und ferner umfassend einen Schnelldampferzeuger (18), der durch die Verbrennung von Wasserstoff Dampf erzeugt, wobei ein Ausgang (19) des Schnelldampferzeugers (18) mit dem Eingang (20) des Dampfverbrauchers (7) verbunden ist,
wobei der Dampfverbraucher (7) in einem ersten Betriebszustand für einen erste Dampfmenge und in einem zweiten Betriebszustand für eine zweite Dampfmenge ausgelegt ist,
wobei die zweite Dampfmenge größer ist als die erste Dampfmenge,
wobei der Dampferzeuger (2) zur Erzeugung von Dampf für den ersten Betriebszustand und zweiten Betriebszustand betreibbar ist,
wobei der Schnelldampferzeuger (18) derart ausgebildet ist, dass dieser Dampf für den zweiten Betriebszustand erzeugt.

2. Anlage (1) nach Anspruch 1,
wobei der erste Betriebszustand als Teillast und der zweite Betriebszustand als Volllast für den Dampferzeuger (2) ausgelegt ist.

3. Anlage (1) nach Anspruch 1 oder 2,
wobei im ersten Betriebszustand die erste Dampfmenge durch den Dampferzeuger (2) erzeugt wird und in einem ersten Zeitpunkt des zweiten Betriebszustand die zweite Dampfmenge durch den Dampferzeuger (2) und dem Schnelldampferzeuger (18) erzeugt wird und in einem zweiten Zeitpunkt des zweiten Betriebszustandes die zweite Dampfmenge durch den Dampferzeuger (2) ohne dem Schnelldampferzeuger (18) erzeugt wird.

4. Anlage (1) nach Anspruch 1, 2 oder 3,
ferner umfassend eine Dampfturbine (15), wobei der Eingang (14) der Dampfturbine (15) mit einem Ausgang (3) des Dampferzeugers (2) und des Schnelldampferzeugers (18) über eine Dampfleitung (22) strömungstechnisch verbunden ist.

5. Anlage (1) nach Anspruch 4,
wobei der Ausgang der Dampfturbine (15) strömungstechnisch mit dem Eingang eines Kondensators (16) verbunden ist,
wobei der Ausgang des Kondensators (16) strömungstechnisch mit dem Eingang (11) des Dampferzeugers (2) verbunden ist.

6. Anlage (1) nach Anspruch 4 oder 5,
wobei der Ausgang (8) des Dampfverbrauchers (7) mit dem Eingang (11) des Dampferzeugers (2) verbunden ist.

7. Anlage (1) nach einem der Ansprüche 4 bis 6,
wobei in der Dampfleitung (22) ein Ventil (17) angeordnet ist, wobei mit dem Ventil (17) eine Regelung der Dampfmenge zu dem Dampfverbraucher (7) erreichbar ist.

8. Anlage (1) nach einem der vorhergehenden Ansprüche, wobei der Schnelldampferzeuger (18) mit einer Wasserleitung (21) verbunden ist und der Schnelldampferzeuger (18) derart ausgebildet ist, dass das Wasser aus der Wasserleitung (21) in Dampf durch die Erzeugung von thermischer Energie im Schnelldampferzeuger (18) umwandelbar ist.

9. Verfahren zum Betreiben einer Anlage (1),
wobei die Anlage (1) mit einem Dampferzeuger (2) und einem Dampfverbraucher (7) ausgebildet wird,
wobei der Dampferzeuger (2) Dampf für den Dampfverbraucher (7) erzeugt,
wobei der Dampfverbraucher (7) für einen ersten Betriebszustand mit einer ersten Dampfmenge und in einem zweiten Betriebszustand mit einer zweiten Dampfmenge ausgelegt wird,
wobei die zweite Dampfmenge größer ist als die erste Dampfmenge,
wobei ein Schnelldampferzeuger (18) eingesetzt wird, der durch die Verbrennung von Wasserstoff Dampf für den Dampfverbraucher (7) erzeugt,
wobei der Dampf für den ersten Betriebszustand durch den Dampferzeuger (2) erzeugt wird,
wobei beim Wechsel vom ersten Betriebszustand in den zweiten Betriebszustand der Dampf für den Dampfverbraucher (7) vom Dampferzeuger (2) und dem Schnelldampferzeuger (18) erzeugt wird.

10. Verfahren nach Anspruch 9,
wobei der Dampferzeuger (2) im ersten Betriebszustand in Teillast betrieben wird.

11. Verfahren nach Anspruch 10,
wobei der Dampferzeuger (2) im zweiten Betriebszustand in Volllast betrieben wird.

12. Verfahren nach Anspruch 11,
wobei der Schnelldampferzeuger (18) bis zum Erreichen der Volllast des Dampferzeugers (2) Dampf für den zweiten Betriebszustand erzeugt.

13. Verfahren nach einem der Ansprüche 10 bis 12,
wobei nach Erreichen der Volllast des Dampferzeugers (2) der Schnelldampferzeuger (18) abgeschaltet wird.

14. Verfahren nach einem der Ansprüche 10 bis 13,
wobei die Anlage (1) mit einer Dampfturbine (15) ausgebildet wird, wobei die Dampfturbine (15) mit Dampf aus dem Dampferzeuger (2) und dem Schnelldampferzeuger (18) versorgt wird.

15. Verfahren nach Anspruch 14,
wobei die Dampfmenge in die Dampfturbine (15) über ein Ventil (17) geregelt wird, das vor dem Eingang (14) der Dampfturbine (15) angeordnet wird.

16. Verfahren zum Umrüsten einer bestehenden Dampfverbraucher-Anlage mit einem Dampferzeuger (2) und einem Dampfverbraucher (7),
wobei ein Dampf für den Dampfverbraucher (7) von dem Dampferzeuger (2) erzeugt wird, wobei der Dampfverbraucher (7) in einem ersten Betriebszustand eine erste Dampfmenge benötigt und in einem zweiten Betriebszustand eine zweite Dampfmenge benötigt, wobei die zweite Dampfmenge größer ist als die erste Dampfmenge,
wobei der Dampferzeuger (2) im Vollast-Betrieb die zweite Dampfmenge erzeugen kann, wobei eine Dampfturbine (15) vorgesehen wird, die mit vom Dampfverbraucher (7) nicht benötigten Dampf beaufschlagt wird,
**dadurch gekennzeichnet, dass**
ein Schnelldampferzeuger (18) eingesetzt wird, der einen zusätzliche Dampf für den Dampfverbraucher (7) erzeugt.

17. Verfahren nach Anspruch 16,
wobei der Dampferzeuger (2) im ersten Betriebszustand in einer Teillast betrieben wird und der Schnelldampferzeuger (18) keinen Dampf erzeugt.

18. Verfahren nach Anspruch 16,
wobei der Dampferzeuger (2) im zweiten Betriebszustand in einer Volllast betrieben wird und der Schnelldampferzeuger (18) Dampf für den Dampfverbraucher (7) so lange erzeugt, bis der Dampferzeuger (2) im Volllast-Betrieb die zweite Dampfmenge erzeugen kann.
